Europäisches Patentamt

European Patent Office

Office européen des brevets

(19)

(11) **EP 1 174 263 B1**

(12) **EUROPEAN PATENT SPECIFICATION**

(45) Date of publication and mention
of the grant of the patent:
**18.06.2003 Bulletin 2003/25**

(21) Application number: **01902785.3**

(22) Date of filing: **07.02.2001**

(51) Int Cl.[7]: **B32B 27/32**, B32B 5/18

(86) International application number:
**PCT/JP01/00831**

(87) International publication number:
**WO 01/058687 (16.08.2001 Gazette 2001/33)**

(54) **POLYOLEFIN RESIN COMPOSITE LAMINATE**

MEHRSCHICHTLAMINAT AUS POLYOLEFIN

STRATIFIE COMPOSITE EN RESINE DE POLYOLEFINE

(84) Designated Contracting States:
**DE FI FR GB IT NL**

(30) Priority: **10.02.2000 JP 2000033990**

(43) Date of publication of application:
**23.01.2002 Bulletin 2002/04**

(73) Proprietor: **SEKISUI CHEMICAL CO., LTD.
Osaka-shi, Osaka 530-8565 (JP)**

(72) Inventors:
 • **OKABE, Masashi,
 c/o SEKISUI CHEMICAL CO., LTD.
 Kyoto-shi, Kyoto 601-8105 (JP)**
 • **FUKUOKA, Takamasa,
 c/o SEKISUI CHEMICAL CO., LTD.
 Kyoto-shi, Kyoto 601-8105 (JP)**
 • **HIRATA, Masanori,
 c/o SEKISUI CHEMICAL CO., LTD.
 Kyoto-shi, Kyoto 601-8105 (JP)**
 • **NAKAMURA, Masanori,
 c/o SEKISUI CHEMICAL CO.,LTD.
 Tsukuba-shi, Ibaraki 300-4247 (JP)**

(74) Representative: **Paul, Dieter-Alfred, Dipl.-Ing. et al
Paul & Albrecht,
Patentanwaltssozietät,
Hellersbergstrasse 18
41460 Neuss (DE)**

(56) References cited:
**EP-A- 0 711 808          WO-A-99/21693
JP-A- 10 237 205          JP-A- 11 291 425**

 • **DATABASE WPI Section Ch, Week 199733
 Derwent Publications Ltd., London, GB; Class
 A32, AN 1997-358457 XP002201981 & JP 09
 150431 A (SEKISUI CHEM IND CO LTD) , 10 June
 1997 (1997-06-10)**
 • **DATABASE WPI Section Ch, Week 199846
 Derwent Publications Ltd., London, GB; Class
 A32, AN 1998-537573 XP002201982 & JP 10
 237205 A (SEKISUI CHEM IND CO LTD) , 8
 September 1998 (1998-09-08)**
 • **PATENT ABSTRACTS OF JAPAN vol. 1998, no.
 05, 30 April 1998 (1998-04-30) & JP 10 000748 A
 (JSP CORP), 6 January 1998 (1998-01-06)**
 • **DATABASE WPI Section Ch, Week 198743
 Derwent Publications Ltd., London, GB; Class
 A32, AN 1987-304116 XP002201983 & JP 62
 214938 A (MITSUI PETROCHEM IND CO LTD), 21
 September 1987 (1987-09-21)**

**Description**

TECHNICAL FIELD

The present invention relates to polyolefin resin composite laminates prepared entirely from polyolefin resins and having high rigidity for use as civil engineering or construction materials, building materials, vehicle members, etc.

BACKGROUND ART

Excellent durability and high rigidity are required of civil engineering materials, building materials, vehicle members, etc., and materials of wood such as Japanese cedar, Japanese cypress, etc. are conventionally in use. However, the use of wood leads to environmental problems such as destruction of forests. Further since it is difficult to supply wood having stabilized properties, plate materials such as plywood and boards of wood material such as particle boards or fiber boards are used in increasing amounts in place of wood itself [see JP-A No. 49-47509(1974)].

Nevertheless, the use of boards of wood materials involves the following problems.

Absorption of moisture results in great dimensional variations.

• Absorption of moisture permits decay.
• Difficult recycling is not desirable from the viewpoint of preservation of resources.
• Many of the boards are at least 700 kg/m$^3$ in apparent density and heavy.
• Since a thermosetting resin adhesive is used for bonding veneers, chips or particles, formaldehyde vaporizes from the resulting wood board to cause atopic dermatitis or the like.
• The boards have a great elastic region and are not amenable to plastic working.

To overcome these problems, much effort has been made to develop materials of high rigidity which consist mainly of a lightweight plastic material, whereas the use of the single plastic imposes limitations on the improvement of rigidity. The attempts involve the drawback of failing to ensure dimensional stability against temperature variations owing to great thermal expansion-contraction characteristics of plastics.

To overcome this problem, FRPs (inorganic fiber reinforced thermosetting plastics) containing inorganic fibers or the like, inorganic fiber reinforced expanded bodies (glass fiber facing material + polystyrene foams), etc. are developed [see JP-A No. 10-311131(1998)]. However the inevitable use of inorganic fibers in these materials results in the following problems.

• Difficulty encountered in recycling and separating the material into components.
• Inorganic fibers suspending during manufacture and working adhere to the skin of human bodies, giving rise to problems such as pain, itch, allergy or the like.
• Although polystyrene and thermosetting resins are used for affording improved rigidity, polystyrene is low in heat resistance, while thermosetting resins are difficult to recycle, have low flexibility and are susceptible to rupture in bending.

In view of the foregoing situations, an object of the present invention is to provide polyolefin resin composite laminates prepared only from polyolefin resin materials which are environmentally friendly and flexible, the laminates being lightweight, having high rigidity, remaining free of decay, showing no dimensional variations if subjected to temperature or humidity variations and being amenable to recycling.

DISCLOSURE OF THE INVENTION

The present invention relates to composite laminates which are prepared entirely from polyolefin resin materials.

As a first feature, the present invention provides a polyolefin resin composite laminate comprising a polyolefin resin structural sheet having a density of 40 to 300 kg/m$^3$ and a modulus in compression of at least 5 MPa (usually up to 100 MPa), and a polyolefin resin sheet laminated to at least one surface of the structural sheet and having a modulus in tension of at least 5 GPa (usually up to 50 GPa) in one direction.

As a second feature, the present invention provides a polyolefin resin composite laminate comprising an expanded polyolefin resin sheet which is 1.1 to 4.0 in the average of aspect ratios Dz/Dxy of cells incorporated therein, 3 to 20 times in expansion ratio and at least 5 MPa (usually up to 100 MPa) in modulus in compression, and a polyolefin resin sheet laminated to at least one surface of the expanded resin sheet and having a modulus in tension of at least 5 GPa (usually up to 50 GPa) in one direction.

As a third feature, the present invention provides a polyolefin resin composite laminate comprising an expanded polyolefin resin sheet which is 1.1 to 4.0 in the average of aspect ratios Dz/Dxy of cells incorporated therein, 3 to 20 times in expansion ratio and at least 5 MPa (usually up to 100 MPa) in modulus in compression, and a stretched polyolefin resin sheet laminated to at least one surface of the expanded resin sheet, stretched at least 10 times (usually up to 40 times) in one direction and having a modulus in tension of at least 5 GPa (usually up to 50 GPa).

As a fourth feature, the present invention provides a polyolefin resin composite laminate which comprises an expanded polyolefin resin sheet having an expansion ratio of 3 to 20 times and a modulus in compression of at least 5 MPa (usually up to 100 MPa), and a stretched polyolefin resin sheet laminated to at least one surface of the expanded resin sheet, stretched at least 10 times (usually up to 40 times) in one direction and having a modulus in tension of at least 5 GPa (usually up to 50 GPa), and which is obtained by reacting a polyolefin resin with a modifying monomer to modify the resin, kneading the modified resin obtained and a thermally decomposable chemical blowing agent added thereto, shaping the resulting expandable resin composition into a sheet, laminating a facing material to at least one surface of the expandable sheet obtained, the facing material having a strength capable of inhibiting the sheet from expanding in in-plane directions when the sheet is heated for expansion, and thereafter heating the expandable sheet for expansion.

As a fifth feature, the present invention provides a polyolefin resin composite laminate comprising a polyolefin resin structural sheet having a density of 40 to 300 kg/m$^3$, a bending buckling strain of at least 2%, preferably at least 3% (usually up to 10%), and a modulus in compression of at least 5 MPa (usually up to 100 MPa), and a stretched polyolefin resin sheet laminated to at least one surface of the structural sheet, stretched at least 10 times (usually up to 40 times) in one direction and having a modulus in tension of at least 5 GPa (usually up to 50 GPa).

As a sixth feature, the present invention provides a polyolefin resin composite laminate comprising an expanded polyolefin resin sheet which is 1.1 to 4.0 in the average of aspect ratios Dz/Dxy of cells incorporated therein, 3 to 20 times in expansion ratio, at least 2%, preferably at least 3%, (usually up to 10%) in bending buckling strain, and at least 5 MPa (usually up to 100 MPa) in modulus in compression, and a stretched polyolefin resin sheet laminated to at least one surface of the expanded resin sheet, stretched at least 10 times (usually up to 40 times) in one direction and having a modulus in tension of at least 5 GPa (usually up to 50 GPa).

The polyolefin resin structural sheet having a density of 40 to 300 kg/m$^3$ and a modulus in compression of at least 5 MPa for use in the first feature of the invention and the polyolefin resin structural sheet having a density of 40 to 300 kg/m$^3$, a bending buckling strain of at least 2 % and a modulus in compression of at least 5 MPa for use in the fifth feature of the invention will each be referred to briefly as the "structural sheet. " The expanded polyolefin resin sheet which is 1.1 to 4.0 in the average of aspect ratios Dz/Dxy of cells incorporated therein, 3 to 20 times in expansion ratio and at least 5 MPa in modulus in compression for use in the second and third features of the invention, and the expanded polyolefin resin sheet which is 1.1 to 4.0 in the average of aspect ratios Dz/Dxy of cells incorporated therein, 3 to 20 times in expansion ratio, at least 2% in bending buckling strain, and at least 5 MPa in modulus in compression for use in the sixth feature of the invention will each be referred to briefly as the "expanded sheet." The polyolefin resin sheet having a modulus in tension of at least 5 GPa in one direction for use in the first and second features of the invention will be referred to as the "high tensile strength sheet." The stretched polyolefin resin sheet stretched at least 10 times in one direction and having a modulus in tension of at least 5 GPa for use in the third to sixth features of the invention will be referred to as the "stretched sheet."

First, a description will be given of the polyolefin resins for use as materials for the sheets for forming the composite laminates of the invention.

The polyolefin resins for use in preparing the structural sheet and the expanded sheet may be homopolymers or copolymers of olefin monomers and are not limited specifically. Suitable to use as such are, for example, low-density polyethylene, high-density polyethylene and straight-chain low-density polyethylene and like polyethylenes, propylene homopolymer, propylene random polymer, propylene block polymer and like polypropylenes, polybutene, ethylene-propylene copolymer, ethylene-propylene-diene terpolymer, ethyelne-butene copolymer, ethylene-vinyl acetate copolymer, ethylene acrylic acid ester copolymer and like copolymers consisting mainly of ethylene. Especially suitable among these are polyethylenes and polypropylenes. These polyolefin reins may be used singly, or at least two of them may be used in combination.

The polyolefin resin may be a polyolefin resin composition comprising a polyolefin resin and less than 30 wt. % of other resin added thereto. The other resin to be used is, for example, polystyrene or a styrene elastomer although not limited particularly. Such other resins are used singly, or at least two of them may be used in combination.

If added to the polyolefin resin in an amount not smaller than 30 wt. %, the other resin is likely to impair the outstanding characteristics of the polyolefin resin, such as lightweightness, chemical resistance, flexibility and elasticity, further presenting difficulty in assuring the melt viscosity required for expansion.

The polyolefin resin may further be a polyolefin resin composition comprising a modifying polymer. Although not limited particularly, examples of such modifying monomers are dioxime compounds, bismaleimide compound, divinylbenzene, allyl multifunctional monomers, (meth)acrylic multifunctional monomers, quinone compounds, etc. These modifying monomers are used singly, or at least two of them may be used in combination.

The density defining the structural sheets according to the first and fifth features of the invention is an apparent density. The apparent density is a numerical value calculated according to JIS K 7222(1985) for a small piece cut out of the polyolefin structural material. If smaller than 40 kg/m$^3$ in apparent density, the structural sheet is too small in modulus in compression, failing to exhibit the desired flexural rigidity. If greater than 300 kg/m$^3$ in apparent density, the sheet gives an excessive weight to the composite laminate. The preferred apparent density of the structural sheet is 60 to 200 kg/m$^3$.

The modulus in compression defining the structural sheets and expanded sheets is a numerical value measured according to JIS K 7220 for the sheet as compressed at a rate of 1 mm/min in the direction of thickness thereof. If the modulus in compression is smaller than 5 MPa, the composite laminate to be obtained fails to have the desired flexural rigidity. When the apparent density is smaller than 300 kg/m$^3$, the modulus in compression is usually up to 100 MPa.

The structural sheet for use in the first feature of the invention is not limited particularly insofar as the sheet is prepared from a resin composition consisting mainly of a polyolefin resin and has a density of 40 to 300 kg/m$^3$ and a modulus in compression of at least 5 MPa. The structural sheet for use in the fifth feature of the invention is not limited particularly insofar as the sheet is prepared from a resin composition consisting mainly of a polyolefin resin and has a density of 40 to 300 kg/m$^3$, a bending buckling strain of at least 2% and a modulus in compression of at least 5 MPa. The structural sheets for use in the first and fifth features of the invention may each be in the form of an expanded body, honeycomb structure or plastic cardboard. From the viewpoint of uniformity of compression characteristics, the expanded body is especially preferable.

The expanded sheets for use in the second to fourth and sixth features of the invention will be described next.

Generally, polyolefin resins are not plastics having a high rigidity. The expanded bodies prepared from polyolefin resins are soft and feel soft.

The expanded polyolefin resin sheet for use in the second and third features of the invention is characterized by being 1.1 to 4.0 in the average of aspect ratios Dz/Dxy of cells incorporated therein, and 3 to 20 times in expansion ratio. The expanded polyolefin resin sheet for use in the sixth feature of the invention is characterized by being 1.1 to 4.0 in the average of aspect ratios Dz/Dxy of cells incorporated therein, 3 to 20 times in expansion ratio and at least 2% in bending buckling strain. These sheets have a remarkably increased modulus in compression of 5 MPa.

The average of aspect ratios (Dz/Dxy) of cells which defines the expanded sheets for use in the second, third and sixth features of the invention is 1.1 to 4.0, preferably 1.3 to 2.5.

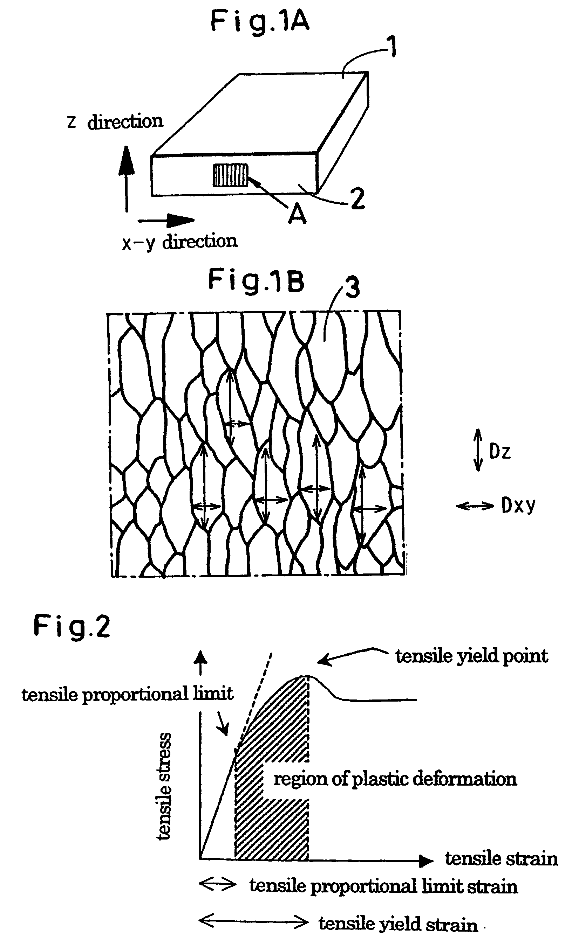

FIG. 1(a) is a perspective view showing an expanded sheet, and FIG. 1(b) is an enlarged view of the portion A in FIG. 1(a). The average of the aspect ratios (Dz/Dxy) means the simple (arithmetic) mean of ratios between the maximum diameters, in specified directions, of the inside cells 3 of the expanded sheet 1 shown in FIG. 1. The average is determined by the following method.

Method of determining average of aspect ratios (Dz/Dxy):

An enlarged photograph at a magnification of X10 is taken of an optional section 2 of the expanded sheet 1 in parallel to the direction of thickness thereof (referred to as "z-direction"). the maximum diameters of randomly selected at least 50 cells 3 are measured in the specified directions, i.e., in the two directions stated below, and the simple (arithmetic) mean of the aspect ratios (Dx/Dxy) is calculated.

Dz: Maximum diameter of the cell 3 in the expanded sheet 1 in parallel to z-direction
Dxy: Maximum diameter of the cell 3 in the expanded sheet 1 in parallel to the direction of width of the sheet or the direction of length of the sheet, i.e., the direction of a plane (referred to as xy-direction) perpendicular to z-direction

By setting the average of aspect ratios (Dz/Dxy) at 1.1 to 4.0 (preferably at 1.3 to 2.5), the cells 3 in the expanded sheet 1 become spindle-shaped and given a major axis in the direction of thickness of the sheet 1. When the sheet 1 is subjected to a compressive force in the direction of thickness, the compressive force will act on the cells 3 in the direction of major axes thereof, with the result that the sheet 1 is capable of exhibiting a high compressive strength (modulus in compression) in the direction of thickness of the sheet 1.

If the average of aspect ratios (Dz/Dxy) is less than 1.1, the cells 3 become almost globular in shape, failing to achieve a sufficiently improved compressive strength (modulus in compression) attributable to the spindle shape of cells 3 and therefore reducing the flexural rigidity of the composite laminate contemplated by the present invention. Conversely, if the aspect ratio (Dz/Dxy) average is in excess of 4.0, the expandable resin will suffer a considerable amount of extension strain only in z-direction to encounter difficulties in controlling expansion and giving a homogeneous expanded body. Although not limited specifically, the Dxy average of the cells 3 inside the expanded sheet 1 is preferably at least 500 μ m, more preferably at least 800 µm.

If the cell diameter is small, the cell walls generally have a reduced thickness, rendering the expanded sheet susceptible to buckling, with the result that if a heavy article is placed on the expanded sheet 1, the sheet is liable to collapse or become indented, whereas if the inside cells 3 of the sheet 1 is given a Dxy average of at least 500 µm, the collapse or indentation due to buckling can be suppressed effectively.

The expansion ratio defining the expanded sheets for use in the second to fourth and sixth features of the invention is 3 to 20 times. The expansion ratio is measured by the following method.

Method of measuring the expansion ratio:

A sample in the form of a sheet is cut out from the expanded sheet with a cutter and checked for apparent density according to JIS K-6767, "Polyethylene Foam Testing Method." The reciprocal of the apparent density measured is taken as the expansion ratio.

If the expansion ratio of the expanded sheet is less than 3 times, the composite laminate obtained becomes heavier, more costly and less useful practically, whereas if the sheet is in excess of 20 times in expansion ratio, the cell walls have a decreased thickness to give the sheet an insufficient compressive strength (modulus in compression).

The expanded sheet is produced by the process to be described below.

Although the process for producing the expanded sheet having such spindle-shaped cells is not limited particularly, the following process is favorable to use.

The expanded bodies made from polyolefin resin compositions are divided generally into those obtained by the chemical expansion process and those obtained by the physical expansion process. The expanded body of the invention can be either type of these expanded bodies, whereas desirable is the expanded body obtained by the chemical expansion process which involves a facilitated expansion procedure.

The expanded sheet to be obtained by the chemical expansion process can be prepared by first dispersing in the polyolefin resin composition a thermally decomposable chemical blowing agent for producing a decomposition gas when heated, shaping the composition into an expandable material in the form of a sheet once, and thereafter heating the sheet material to expand the polyolefin resin composition with the gas produced by the blowing agent.

Although the thermally decomposable chemical blowing agent is not limited specifically, examples of suitable blowing agents are azodicarbonamide (ADCA), benzenesulfonyl hydrazide, dinitrosopentamethylenetetramine, toluenesulfonyl hydrazide, 4,4-oxybis(benzenesulfonyl hydrazide), etc., among which ADCA is more preferable to use. These thermally decomposable chemical blowing agents are used singly, or at least two of them may be used in combination.

The expanded sheet to be obtained by the physical expansion process can be prepared by dissolving a physical blowing agent in the polyolefin resin composition at a high pressure once, and expanding the polyolefin resin composition with the gas produced when the composition is exposed to atmospheric pressure again.

Although the physical blowing agent is not limited particularly, examples of suitable blowing agents are water, carbon dioxide, nitrogen, organic solvents, etc. These physical blowing agents are used singly, or at least two of them may be used in combination.

The expanded sheet is prepared more specifically by the following process, i.e., by dispersing 2 to 20 parts by weight of the thermally decomposable chemical blowing agent in 100 parts by weight of the modified polyolefin resin composition which is prepared by kneading in a molten state a polyolefin resin serving as the main component, aforementioned modifying monomer and other resin, shaping the resulting composition into an expandable sheet once, and thereafter heating the expandable sheet to a temperature not lower than the decomposition temperature of the thermally decomposable chemical blowing agent, whereby the desired expanded sheet can be formed.

Although low in the degree of crosslinking, the shaped expandable sheet can be made expandable at atmospheric pressure by modifying the polyolefin resin with the modifying monomer. The term the "degree of crosslinking" as used herein means a gel fraction, and a low degree of crosslinking refers to a gel fraction of up to 25 wt. %. The gel fraction is determined by dissolving a sample in hot xylene at 120° C for 24 hours, measuring the dry weight of the fraction remaining undissolved (gel fraction) and calculating the percentage of the dry weight based on the initial weight of the sample.

Unlike the sheet crosslinked with an electron beam and the sheet crosslinked with a thermally decomposable chemical crosslinking agent, the expandable sheet is lower in crosslinking degree (gel fraction) and expandable by heating at atmospheric pressure, so that the cells of the expanded body are larger than those of an expanded body obtained from the crosslinked sheet and have an increased wall thickness. The expandable sheet therefore makes an expanded sheet which is excellent in mechanical properties such as compressive strength and resistance to buckling.

Furthermore, the expanded sheet is small in the degree of crosslinking, can therefore be melted again by heating and is highly amenable to recycling. This renders the material reusable and applicable to other use.

The expandable sheet can be shaped by a method which is not limited particularly and which can be any of methods generally practiced for shaping plastics, such as extrusion, pressing, blow molding, calendering, injection molding, etc. Especially preferable among these is extrusion by which the polyolefin resin composition to be discharged, for example, from a screw extruder is shaped directly into a sheet since this method is highly productive. A continuous expandable sheet having a specified width is available by this method.

The expandable sheet is made into an expanded sheet by the chemical expansion process usually over a temperature range of from a temperature not lower than the decomposition temperature of the thermally decomposable chemical blowing agent to a temperature lower than the thermal decomposition temperature of the polyolefin resin.

The sheet is expanded preferably by using a continuous expansion apparatus. The method of expansion to be practiced by the continuous apparatus is not limited particularly. Examples of useful methods include those which use a haul-off foaming machine for continuously expanding the expandable sheet while hauling up the sheet at the outlet side of a heating oven, belt foaming machine, vertical or horizontal foam oven, hot-air constant temperature chamber, etc., and those which use an oil bath, metal bath, salt bath or like hot bath.

While the method of giving the expanded sheet to be thus obtained an aspect ratio (Dz/Dxy) average of 1.1 to 4.0 is not limited specifically, it is preferable, for example, to laminate to at least one surface of the sheet to be expanded a facing material having a strength to suppress expanding forces in in-plane directions (x-,y-directions) of the expandable sheet during expansion.

Laminating the facing material to at least one surface of the sheet to be expanded suppresses the expansion of the expandable sheet in two-dimensional directions (x-, y-directions) in the plane of the sheet, making it possible to expand the sheet only in the direction of thickness (z-direction) and forming spindle-shaped cells in the expanded sheet obtained, with the major axes of the cells oriented in the direction of thickness.

The facing material is not limited particularly insofar as it is capable of withstanding temperatures not lower than the expansion temperature of the expandable sheet, i.e., temperatures not lower than the melting point of the polyolefin resin and temperatures not lower than the decomposition temperature of the thermally decomposable chemical blowing agent. Examples of suitable facing materials are paper, cloth, wood, iron, nonferrous metals, woven or nonwoven fabrics of organic or inorganic fibers, cheesecloth, glass fiber, carbon fiber, stretched sheet of polyolefin resin to be described later, etc. The expanded sheet may be obtained by using a releasable sheet, such as a Teflon sheet, as the facing material, expanding the expandable sheet in the direction of thickness and thereafter removing the releasable sheet.

When the facing material to be used is made of a material other than polyolefin resins, it is desirable to use the facing material in the smallest possible amount from the viewpoint of amenability to recycling.

Among the facing materials mentioned, nonwoven fabrics and cheesecloth are favorable to use since these materials provide an excellent anchor effect for the stretched sheet of polyolefin resin to be laminated and produce almost no adverse effect on the human body and environment.

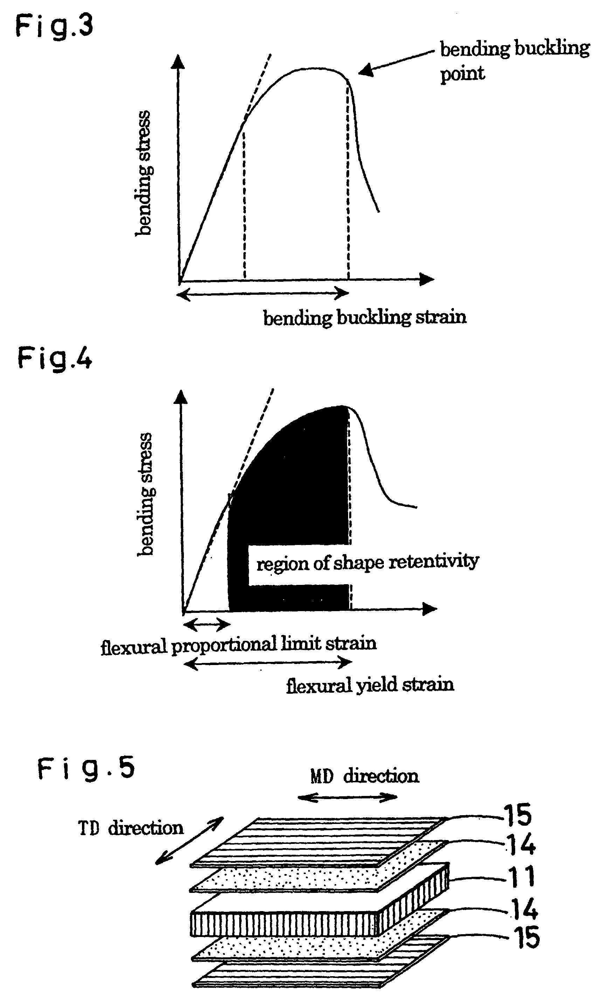

The fifth structural sheet and the sixth expanded sheet are characterized in that the sheets have a bending buckling strain of at least 2%. When the structural sheet and the expanded sheet are progressively bent, the point where the bending stress markedly reduces is defined as a bending buckling point according to the present invention as shown in FIG. 3. When progressively bent, the structural sheet and the expanded sheet buckle on the compression side at the bending buckling point. If rupture occurs in bending before bending buckling occurs, the point of rupture in bending is taken as the bending buckling point. Further the term "bending buckling strain" as used according to the invention is defined as the bending strain at the bending buckling point. When deformed by bending, the composite laminate reaches a plastic deformation region of the stretched sheet, exhibiting shape retentivity before the structural sheet or expanded sheet reaches a flexural yield point while buckling by bending. If the bending buckling strain of the structural sheet and the expanded sheet is smaller than 2%, compression buckling of the structural sheet or expanded sheet occurs before the composite laminate as bent reaches the plastic deformation region of the stretched sheet, making it impossible for the laminate to undergo plastic deformation.

In view of the shape retentivity, therefore, the bending buckling strain should preferably be not smaller than 2%. Illustrated for the explanation of this phenomenon are a graph (FIG. 2) showing the relationship between the tensile strain of the stretched sheet and the tensile stress thereof, a graph (FIG. 3) showing the relationship between the bending buckling strain of the expanded sheet and the bending stress thereof, and a graph (FIG. 4) showing the relationship between the flexural yield strain of the composite laminate and the bending stress thereof. The amount of bending or flexural strain is calculated, for example, according to JIS K 7171.

The bending buckling strength of the structural sheet and the expanded sheet is preferably at least 0.5 MPa, more preferably at least 1.0 MPa. If this strength is less than 0.5 MPa, the structural or expanded sheet is likely to buckle by bending before the composite laminate as bent reaches the plastic region of the stretched sheet.

The modulus in flexure of the structural sheet and the expanded sheet is preferably 30 MPa to 5 GPa although not limited particularly. If the modulus in flexure is less than 30 MPa, buckling is especially liable to occur due to bending, making it difficult for the composite laminate to exhibit shape retentivity.

Next, a description will be given of the high tensile strength sheet to be laminated to the structural sheet or expanded sheet for use in the first and second composite laminates.

The high tensile strength sheet is characterized in that the sheet has a modulus in tension of at least 5 GPa in one direction. The modulus in tension is a numerical value measured according to JIS K 7127.

If the modulus in tension is smaller than 5 GPa, the composite laminate to be obtained will not have an improved flexural rigidity. The modulus obtained by usual stretching is up to 50 GPa.

Although the method of preparing sheets of great modulus in tension from polyolefin resin materials is not limited specifically, stretching is desirable as this method. While the stretching direction is not limited specifically either, stretching in one direction is especially desirable for achieving a great improvement in modulus in tension.

A description will be given of the stretched sheet for use in the third to sixth features of the invention.

While the polyolefin resin for use in preparing the stretched sheet is not limited specifically, examples of useful polyolefin resins are polyethylenes such as low-density polyethylene, high-density polyethylene and straight-chain low-density polyethylene, and polypropylenes such as propylene homopolymer, propylene random polymer, propylene block polymer. More preferable among these is a polyethylene having a high theoretical modulus in view of the modulus of the stretched sheet. High-density polyethylene having high crystallinity is most suitable to use. These polyolefin resins are used singly, or at least two of them may be used in combination.

The weight average molecular weight of the polyolefin resin for use in preparing the stretched sheet is not limited particularly but is preferably 100,000 to 500,000. If the weight average molecular weight of the polyolefin resin is less than 100,000, the polyolefin resin per se becomes brittle to result in impaired stretchability, whereas if the weight average molecular weight of the polyolefin resin is conversely in excess of 500,000, impaired stretchability will result to present difficulty in shaping the stretched sheet or in stretching at a high ratio.

The weight average molecular weight is measured generally by the so-called gel permeation chromatographic (high-temperature GPC) method, i.e., by dissolving the polyolefin resin, for example, in a heated organic solvent such as o-dichlorobenzene, thereafter pouring the solution into a column and measuring the elution time. The above-mentioned weight average molecular weights are also values obtained by the high-temperature GPC method using o-dichlorobenzene as the organic solvent.

Although the melt flow rate (MFR) of the polyolefin resin for use in preparing the stretched sheet is not limited specifically, the rate is preferably 0.1 to 20g/10 min. If the MFR of the polyolefin resin is less than 0.1 g/10 min or in excess of 20 g/10 min, it is likely that difficulty will be encountered in stretching at a high ratio. The MFR is measured according to JIS K-7210, "Method of Testing Flow of Thermoplastic Resin."

Especially suitable for use as the polyolefin resin for preparing the stretched sheet is a high-density polyethylene having a weight average molecular weight of 100,000 to 500,000 and an MFR of 0.1 to 20 g/10 min.

The stretched sheet may have incorporated therein an auxiliary crosslinking agent, photo-radical polymerization initiator, etc. in addition to the polyolefin resin serving as the main component when so required insofar as such additives will not be detrimental to the accomplishment of the object of the invention.

Examples of auxiliary crosslinking agents are multifunctional monomers such as trially cyanurate, trimethylolpropane triacrylate and diallyl phthalate. Further examples of useful photo-radial polymerization initiators are benzophenone, thioxanthone, acetobenzophenone, etc. These auxiliary crosslinking agents and photo-radical polymerization initiators are used singly, or at least two of them may be used in combination.

Although the amount of the auxiliary crosslinking agent or photo-radical polymerization initiator is not limited specifically, it is desirable to use 1 to 2 parts by weight of the auxiliary crosslinking agent or photo-radical polymerization initiator per 100 parts by weight of the polyolefin resin. If the amount of the auxiliary crosslinking agent or photo-radical polymerization initiator is less than 1 part by weight per 100 parts by weight of the polyolefin resin, it is likely that the polyolefin resin will not be crosslinked or subjected to photo-radical polymerization rapidly, whereas if the amount of the crosslinking agent or the polymerization initiator used is conversely in excess of 2 parts by weight per 100 parts by weight of the polyolefin resin, difficulty is likely to be encountered in stretching the sheet at a high ratio.

The stretched sheet is prepared by a process which is not limited particularly, for example, by kneading in a molten state with an extruder or the like a polyolefin resin composition comprising a polyolefin resin as the main component, and an auxiliary crosslinking agent or photo-radical polymerization initiator used as required, to plasticize the composition, thereafter extruding the molten composition into a sheet through a T-die, followed by cooling to prepare first the sheet of polyolefin resin to be stretched (sheet material to be stretched).

Although not limited particularly, the thickness of the sheet to be stretched is preferably 0.5 to 10 mm. If less than 0.5 mm in thickness, the sheet affords too thin a stretched sheet when stretched, failing to give a sufficient strength and entailing impaired handleability. Conversely, if in excess of 10 mm in thickness, the sheet may become difficult to stretch.

Next, the above sheet is stretched to obtain a stretched sheet.

The stretch ratio for the stretching treatment is so determined that the stretched sheet is given a modulus in tension of at least 5 GPa. The stretch ratio is preferably 10 to 40 times, more preferably 20 to 40 times. If the stretch ratio is less than 10 times, the stretched sheet will not become 5 GPa in modulus in tension or will not be reduced in average coefficient of linear expansion to be described later irrespective of the type of polyolefin resin, with the result that the composite laminate obtained fails to have the desired flexural rigidity or dimensional stability. Conversely, if the stretch ratio is over 40 times, it may become difficult to effect a controlled stretching treatment.

The temperature at which the stretching treatment is conducted is preferably 85 to 120° C although not limited particularly. If the stretching temperature is lower than 85° C, the stretched sheet is liable to become whitened or difficulty will be encountered in stretching the sheet at a high ratio. Conversely, if the stretching temperature is over 120° C, the sheet to be stretched becomes prone to break or difficult to stretch at a high ratio.

The method of stretching is not limited particularly either. The sheet may be stretched usually monoaxially, while the roll stretching method may be resorted to especially favorably.

The roll stretching method is such that the sheet to be stretched is nipped between two pairs of stretching rolls which are different in speed and is pulled with heating. The sheet can be made to have its molecules oriented effectively only in the direction of monoaxial stretching. In this case, the speed ratio of the two pairs of stretching rolls becomes the stretch ratio.

In the case where the sheet to be stretched has a large thickness, it may be difficult to stretch the sheet smoothly by the roll stretching method only. In this case, the sheet may be rolled before stretching with the rolls.

The sheet is thus rolled by inserting between a pair of pressure rolls rotating in opposite directions the sheet having a thickness larger than the spacing between the pressure rolls so as to reduce the thickness of the sheet to be stretched and to extend the sheet longitudinally thereof. The sheet thus rolled is oriented monoaxially before stretching and is therefore smoothly stretched monoaxially by the subsequent step of roll stretching.

The stretching step can be performed at a temperature in the preferred range (85 to 120° C) by suitably adjusting the preheating temperature for the sheet to be stretched, the temperature of stretching rolls, the temperature of the atmosphere, etc.

The stretched sheet thus obtained may be subjected to a crosslinking treatment to give higher heat resistance or to improve the heat resistance and creep resistance of the composite laminate to be eventually obtained.

The crosslinking treatment can be conducted, for example, by irradiation with an electron beam or ultraviolet rays although the means is not limitative.

When the electron beam is used for the crosslinking treatment, the dose of the electron beam is not limited particularly but may be suitably determined in view of the composition and thickness of the stretched sheet. Generally the dose is preferably 1 to 20 Mrad, more preferably 3 to 10 Mrad. In the case where the electron beam is used for the crosslinking treatment, the auxiliary crosslinking agent is incorporated into the stretched sheet in advance, whereby the sheet can be crosslinked smoothly.

The dose of ultraviolet rays to be applied for the crosslinking treatment is not limited particularly but may be determined suitably, for example, in view of the composition and thickness of the stretched sheet. Generally the dose is preferably 50 to 800 mW/cm$^2$, more preferably 100 to 500 mW/cm$^2$. In the case where ultraviolet rays are used for the crosslinking treatment, the photo-radical polymerization initiator or auxiliary crosslinking agent is incorporated into the stretched sheet in advance, whereby the sheet can be crosslinked smoothly.

Although the degree of crosslinking of the stretched sheet is not limited particularly, it is desirable that the aforementioned gel fraction be about 50 to about 90 wt. %.

The stretched sheet is one stretched at least 10 times and is therefore diminished in the degree of thermal contraction or expansion due to temperature variations. Accordingly, the lamination of the stretched sheet to the third to sixth structural sheet or expanded sheets causes the stretched sheet to suppress the thermal contraction or expansion of the structural or expanded sheet, assuring the contemplated complex laminate of dimensional stability against temperatures.

The average coefficient of linear expansion serves as a numerical value indicating the degree of thermal contraction or expansion.

The stretched sheet for use in the third to sixth features of the invention is up to $5 \times 10^{-5}/°$ C, preferably up to $3 \times 10^{-5}/°$ C, more preferably $-2 \times 10^{-5}$ to $2 \times 10^{-5}/°$ C, in average coefficient of linear expansion.

The average coefficient of linear expansion is a measure indicating the rate of dimensional expansion of a body with the temperature. The average coefficient of linear expansion can be determined by precisely measuring the dimension of the body by TMA (mechanical analysis) during the rise of temperature in succession, while it is possible to determine the average alternatively by measuring the dimension of the stretched sheet at 5° C and 80° C and calculating the average from the difference.

Generally, bodies of polyolefin resins have a great average coefficient of linear expansion of $5 \times 10^{-5}/°$ C, whereas the stretching treatment affords stretched sheets which are up to $5 \times 10^{-5}/°$ C in average coefficient of linear expansion. The stretched sheet reduces in the average coefficient of linear expansion as the stretch ratio increases.

When singly checked, the structural sheet and the expanded sheet are approximately $5 \times 10^{-5}$ to $15 \times 10^{-5}/°$ C in the average coefficient of linear expansion of the polyolefin resin sheet and have the problem of being great in dimensional variations due to thermal contraction or expansion. However, lamination of the stretched sheet having an

EP 1 174 263 B1

average coefficient of linear expansion of up to 5 X 10$^{-5}$/° C to at least one surface of the structural or expanded sheet affords a composite laminate which is reduced in average coefficient of linear expansion and less prone to dimensional variations due to thermal contraction or expansion.

Since the stretched sheet is increased in stretch ratio so as to be given an average coefficient of linear expansion of up to 5 × 10$^{-5}$/° C, the sheet is increased also in the tensile strength (modulus in tension) in the stretching direction. This produces the synergistic effect of giving a remarkably improved flexural strength (modulus in bending) to the composite laminate which is prepared by laminating the stretched sheet to at least one surface of the structural sheet or expanded sheet.

Next, a description will be given of the method of laminating the high tensile strength sheet or stretched sheet to the structural sheet or expanded sheet.

The method of laminating the high tensile strength sheet or stretched sheet to at least one surface of the structural sheet or expanded sheet to obtain a composite laminate is not limited particularly but can be, for example, the thermal bonding method resorting to heating, or the adhesion method with use of an adhesive. However, the thermal bonding method is preferable to use which is excellent in productivity.

Although the process for producing the composite laminate by thermal bonding is not limited particularly, the following two processes are generally useful, for example, when the expandable sheet is expanded by the chemical expansion process. [Process I] Laminating a facing material having a strength to suppress expansion of the expandable sheet in in-plane directions (x-,y-directions) to at least one surface of the expandable sheet, heating the expandable sheet for expansion and thereafter thermally bonding the stretched sheet to at least one surface of the expanded sheet obtained to prepare a composite laminate.

[Process II] Laminating the stretched sheet to at least one surface of the expandable sheet by thermal bonding, and thereafter heating the expandable sheet for expansion to prepare a composite laminate.

Process II is usable if the stretched sheet does not deform thermally at the temperature at which the expandable sheet is heated for expansion, whereas the expanding temperature of the expandable sheet is usually as high as about 180 to about 250° C, rendering the stretched sheet liable to deform thermally. Accordingly, Process I is more preferable to use than Process II.

When the stretched sheet is to be thermally bonded to the expanded sheet by Process I, the surface of the expanded sheet or stretched sheet may be treated or coated with a primer. A polyolefin resin film or the like having a melting point lower than the temperature at which the stretched sheet deforms thermally may be interposed between the expanded sheet and the stretched sheet before thermal bonding.

Although the direction of lamination of the stretched sheet to the expanded sheet is not limited particularly, the stretched sheet has improved mechanical properties especially in the direction in which the sheet is stretched, so that the sheet may be laminated in one direction to ensure this advantage depending on the use or desired mechanical properties of the composite laminate, or in at least two directions (orthogonal or at a desired angle).

The number of layers forming the laminate of expanded sheet and stretched sheet and the thickness of composite laminate are suitably determined in conformity with the use and desired mechanical properties of the composite laminate.

Furthermore, the stretched sheet may be laminated not only to the upper and lower surfaces of the expanded sheet but also to side faces of the expanded sheet. This makes it difficult for a failure in bending to develop from an interface portion, giving a remarkably improved bending strength.

Although the heating conditions and pressure application conditions for thermal bonding differ with the type of stretched sheet to be used and can not therefore be determined straightforwardly, it is generally desirable to effect thermal bonding at a heating temperature lower than the melting point of the polyolefin resin serving as the main component of the stretched sheet under an elevated pressure of about 0.01 to about 1.0 MPa.

If the heating temperature for thermal bonding is not lower than the melting point of the polyolefin resin used as the main component of the stretched sheet, the thermal contraction or expansion of the stretched sheet is likely impair the shape or average coefficient of linear expansion of the composite laminate. Further if the pressure applied for thermal bonding is outside the above range, the composite laminate is likely to have an impaired shape.

Finally, a description will be given of the uses of the composite laminates of the present invention.

The composite laminates of the present invention are made entirely from lightweight plastic materials of high rigidity and applicable, for example, to the following uses for which wood, wood boards and inorganic fiber reinforced plastics are presently used.

- Civil engineering and construction materials
  Scaffold plates, concrete form panels, sleepers, pressure receiving plates, construction base plates, bridge girders, banking raising panels, impervious panels, earth retaining plates, imitation trunks (park materials).
- Building materials
  Deck materials, wall panels, floor foundation members, heat insulating panels, sound insulating panels, tatami

9

cores, flooring linings, heat bridge preventing materials, partition cores, desk top plates, bath core wall backups, signboard cores.

• Vehicle members

Ceiling materials, shock absorbing members, bumper beams, floor deck materials, under trays, bonnet linings, wall materials, door cores, outer panels.

The applications of the composite laminates of the present invention are not limited to those given above. The laminates are expected to find wider application wherein use is made of the shape retentivity of the laminate due to the characteristic plastic deformation thereof, because of the advantages involved in bending work in conformity with the shape at the site and in adjusting the unevenness of the laminate when it is to be installed in place.

The expanded sheet is in the range of 1.1 to 4.0 in the average of aspect ratios (Dz/Dxy) of cells incorporated therein and has an expansion ratio in the range of 3 to 20 times. More specifically, the expanded sheet has incorporated therein spindle-shaped cells which are oriented in the direction of thickness of the sheet, also has a specified expansion ratio and is therefore excellent in mechanical properties such as compressive strength, modulus in compression, flexibility in the bending direction, creep resistance and elastic restorability although lightweight.

Additionally, the stretched sheet is stretched at least 10 times, is accordingly remarkably improved in modulus in tension in the stretching direction, and unlike usual plastics, undergoes little or no thermal contraction or expansion due to temperature variations.

Given below are the advantages of the composite laminates which are obtained by laminating the stretched sheet to the structural sheet or expanded sheet.

• Since the two sheets are each made from a polyolefin resin, the laminate is less likely to burden the environment and more amenable to recycling than wood boards or inorganic fiber-plastic composite materials.

• The stretched sheet has high tensile rigidity and therefore provides reinforcement for surface contraction or expansion due to bending, while the structural sheet or expanded sheet has high compressive rigidity although lightweight and therefore serves to transmit stress due to bending. As a result, a high-strength composite laminate is available which is lightweight and has high compressive rigidity and flexural rigidity.

• When laminated to the expanded sheet, the stretched sheet, which is greatly diminished in thermal contraction or expansion, suppresses the thermal contraction or expansion of the expanded sheet, giving enhanced dimensional stability.

• When increased in bending buckling strain, the expanded sheet reaches the point of buckling due to bending when subjected to a bending stress, permitting the stretched sheet to plastically deform before the composite laminate yields due to bending. Accordingly, the composite laminate has shape retentivity.

BRIEF DESCRIPTION OF THE DRAWINGS

FIG. 1(a) is a perspective view showing an expanded sheet, and FIG. 1(b) is an enlarged view of the portion A in FIG. 1(a).

FIG. 2 is a graph showing the relationship between the tensile strain of a stretched sheet and the tensile stress thereof.

FIG. 3 is a graph showing the relationship between the bending buckling strain of the expanded sheet and the bending stress thereof.

FIG. 4 is a graph showing the relationship between the flexural yield strain of a composite laminate and the bending stress thereof.

FIG. 5 is an exploded perspective view of a laminate comprising five layers of three different components.

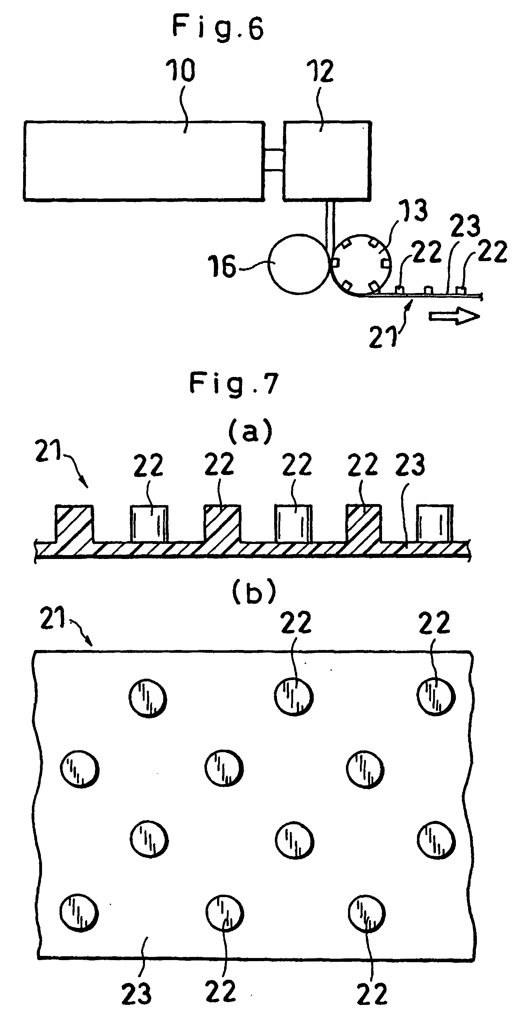

FIG. 6 is a schematic side elevation showing a screw extruder for use in Example 4 for kneading a blowing agent.

FIG. 7(a) is a side elevation showing an expandable resin composition sheet obtained in Example 4, and FIG. 7 (b) is a plan view of the same sheet.

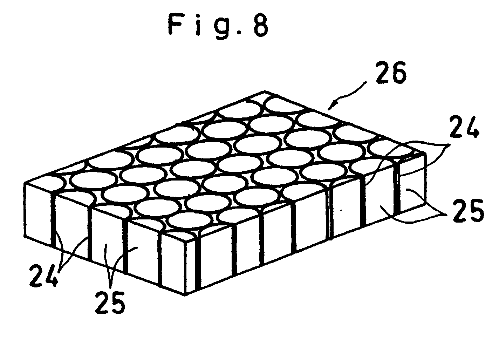

FIG. 8 is a perspective view of an expanded sheet of honeycomb structure obtained in Example 4.

BEST MODE OF CARRYING OUT THE INVENTION

The present invention will be described in greater detail with reference to examples.

Example 1

i)Preparation of Expanded Sheet of Polyolefin Resin

(1)Preparation of Modified Polyolefin Resin

A twin-screw extruder, BT40 (product of Plastic Kogaku Kenkyusho), having screws rotatable in the same direction was used for modification. The extruder had self-wiping double-flighted screws, with L/D of 35 and D of 39 mm. The cylinder barrel comprised first to sixth barrels arranged downstream from the upstream side of the extruder, which had a three-orifice strand die. The fourth barrel had a vacuum vent for collecting the volatile fraction.
The operating conditions are as follows.

- Cylinder barrel temperature settings

| First barrel | 180° C |
| Second to sixth barrels | 220° C |
| Die | 220° C |

- Rotational speed of screws: 150 rpm

First, a polyolefin resin was placed into the modifying screw extruder of the above construction through a rear-end hopper, a mixture of a modifying monomer and organic peroxide was placed into the extruder through the third barrel, and the ingredients were kneaded in a molten state to obtain a modified resin. A volatile fraction produced within the extruder at this time was removed by evacuation through the vacuum vent.
The polyolefin resin was a polypropylene random copolymer ("EX6," product of Nippon Polychem Co., Ltd., 1.8 in MFR, 0.9 $g/cm^3$ in density) and was fed at a rate of 10 kg/h. The modifying monomer was divinylbenzene and was supplied in an amount of 0.5 part by weight per 100 parts by weight of the polyolefin resin. The organic peroxide was 2,5-dimethyl-2,5-di(tert-butyl peroxide)hexyne-3 and was supplied in an amount of 0.1 part by weight per 100 parts by weight of the polyolefin resin.
The modified resin prepared from the polyolefin resin, modifying monomer and organic peroxide by kneading in a molten state was discharged from the strand die, cooled with water and cut by a pelletizer to obtain modified resin pellets.

(2)Preparation of Expandable Resin Composition

A twin-screw extruder, Model TEX-44 (product of Japan Steel Works, Ltd.), having screws rotatable in the same direction was used for kneading a blowing agent. The extruder had self-wiping double-flighted screws, with LID of 45.5 and D of 47 mm. The cylinder barrel comprised first to twelfth barrels arranged downstream from the upstream side of the extruder, which had a seven-orifice strand die. Given below are the temperature setting zones.
The first barrel was cooled at all times.

| First zone | second-fourth barrels |
| Second zone | fifth-eighth barrels |
| Third zone | ninth-twelfth barrels |
| Fourth zone | die and adapter portion |

The sixth barrel for supplying the blowing agent therethrough was provided with a side feeder. The eleventh barrel was provided with a vacuum vent for collecting the volatile fraction. The operating conditions are as follows.

- Cylinder barrel temperature settings

| First zone | 150° C |

(continued)

| Second zone | 170° C |
|---|---|
| Third zone | 180° C |
| Fourth zone | 160° C |

- Rotational speed of screws: 40 rpm

The modified resin thus obtained and polypropylene of the homo-type ("FY4," product of Nippon Polychem Co., Ltd., 5.0 in MFR, 0.9 g/cm³ in density) were fed each at a rate of 10 kg/h to the blowing agent kneading screw extruder. Further the blowing agent was supplied to the extruder through the side feeder thereon. The blowing agent was azodicarbonamide (ADCA) and was fed at a rate of 1.0 kg/h. The modified resin and the blowing agent kneaded together afforded an expandable resin composition.

(3)Preparation of Expandable Sheet of Polyolefin Resin

The expandable resin composition was extruded from a T-die to obtain an expandable sheet of polyolefin resin measuring 350 mm in width and 0.5 mm in thickness.

(4)Preparation of Expandable Sheet Having Facing Material

A nonwoven fabric of polyethylene terephthalate ("Spanbond ecule 6301A," product of Toyobo Co., Ltd., weighing 30 g/m²) serving as a facing material was placed over each of opposite surfaces of the expandable sheet of polyolefin resin, and the assembly is pressed by a press at a temperature of 180° C to obtain an expandable sheet having the facing material.

(5)Expansion

The edge portions were removed from the expandable sheet having the facing material and prepared to obtain a square sample 300 mm on each side. The sample was heated in an oven at 230° C for about 5 minutes to expand the expandable sheet and obtain an expanded sheet of polyolefin resin having a thickness of 5 mm.

(6)Evaluation of Expanded Sheet

The expanded sheet of polyolefin obtained was checked for the following items for evaluation.

- Apparent density:
    The apparent density was measured according to JIS K 6767.
- Expansion ratio:
    After the facing material was removed from the composite laminate with a cutter, the apparent density of the laminate was measured according to JIS K-6767, "Polyethylene Foam Testing Method," and the reciprocal of the measurement was taken as the expansion ratio.
- Shape of cells (average aspect ratio):
    The composite laminate was cut along the direction of its thickness (z-direction), and an enlarged photograph was taken of the central portion of the resulting section at a magnification of X15 while observing the section under an optical microscope. The Dz and Dxy values of all the cells on the photograph were measured with calipers to calculate Dz/Dxy for each cell, and the arithmetic means of Dz/Dxy ratios for 100 cells was calculated as the average aspect ratio. The cells up to 0.05 mm in Dz (actual diameter) and those at least 10 mm in this value were excluded from the measurement.
- Modulus in compression:
    Measurements were taken according to JIS K 7203 at a testing rate of 1 mm/min to calculate the modulus in compression.
- Bending buckling strain
    Measurements were taken according to JIS K 7171 at a testing rate of 1 mm/min with a span of 180 mm. The point where the sample was buckled by bending with a marked decrease in bending stress was taken as a bending buckling point, and the strain at this point was measured as the bending buckling strain.
- Coefficient of linear expansion

Gage marks were made on the sample at an interval of about 150 mm, the sample was then allowed to stand in a constant-temperature chamber at 5° C for 1 hour, and the distance between the gage marks was measured. Subsequently, the sample was allowed to stand in a constant temperature chamber at 80° C for 1 hour, and the distance between the gage marks was similarly measured. This procedure was repeated three times. The averages of the distances between the gage marks at 5° C and 80° C obtained by the second and third procedures were determined. The coefficient of linear expansion was given by the following equation.

$$\text{Coefficient of linear expansion (1/° C)} = \frac{\text{distance (mm) at } 80°C - \text{distance (mm) at } 5°C}{(80 - 5)(°C) \times \text{distance (mm) at } 5°C}$$

ii)Preparation of Stretched Sheet of Polyolefin Resin

(1)Preparation of Extruded Sheet

A composition was prepared from 100 parts by weight of high-density polyethylene (trade name: HY540, product of Mitsubishi Chemical Co., Ltd., 1.0 in MFR, 133° C in melting point, 300,000 in weight average molecular weight) and 1 part by weight of benzophenone (photopolymerization initiator). The composition was melted and kneaded in a 30-mm twin-screw extruder at a resin temperature of 200° C, extruded into a sheet through a T-die and cooled with cooling rolls to obtain an unstretched sheet measuring 1.0 mm in thickness and 100 mm in width.

(2)Rolling•Crosslinking

The unstretched sheet was rolled to a ratio of 6 times using 6-inch rolls (product of Kodaira Seisakusho) set at a surface temperature of 100° C, thereafter paid off at a rate of 2 m/min with rolls and passed through a heating oven having an atmospheric temperature of 85° C, hauled up at a rate of 8 m/min with rolls, stretched to a ratio of 5 times with rolls and wound up. The resulting sheet was irradiated with high-pressure mercury lamps over opposite surfaces thereof for 5 seconds for crosslinking.
Finally, the sheet obtained was treated for relaxation at 130° C free of tension for 1 minute.
The stretched sheet thus prepared measured 50 mm in width and 0.20 mm in thickness and was transparent. This sheet was about 30 times in total stretch ratio, -1.5 X $10^{-5}$ in coefficient of linear expansion, 135° C in melting point [peak temperature measured by DSC (differential scanning calorimeter)] and 12 GPa in modulus in tension.

(3)Evaluation of Stretched Sheet

• Modulus in tension
    The sample was checked for tensile properties according to the tensile test method of JIS K 7113.
• Coefficient of linear expansion
    The coefficient of linear expansion was measured by the same method as stated above. When oriented, the sample was evaluated with respect to MD direction (same direction as the stretching direction) and TD direction (direction orthogonal to MD).

iii)Production of Composite Laminate

(1) Lamination·Thermal Bonding

With reference to FIG. 5, a laminate comprising five layers of three different materials was prepared by using the expanded sheet 11 of polyolefin obtained previously, placing a low-density polyethylene film (UF230, product of Mitsubishi Chemical Co., Ltd., 30 μm in thickness) 14 over each surface of the sheet 11, and further placing the stretched sheet 15 of polyolefin resin over the film 14. The assembly was pressed by a hand press at a temperature of 125° C and pressure of 196 kPa (2 kgf/cm$^2$) for 2 minutes and thereafter cooled with water by a water-cooled press (196 kPa in pressure) to obtain a composite laminate having a thickness of 5 mm.

(2) Evaluation of Composite Laminate

- Modulus in flexure

The modulus in flexure was calculated by taking measurements according to JIS K 7171 at a testing rate of 5 mm/min with a span of 180 mm. When oriented, the sample was evaluated with respect to MD direction and TD direction.
- Flexural strength

The flexural strength was calculated by taking measurements according to JIS K 7171 at a testing rate of 5 mm/min. The term flexural strength in this case refers to a maximum stress in bend. When oriented, the sample was evaluated with respect to MD direction and TD direction.

- Coefficient of linear expansion

The coefficient of linear expansion was measured by the same method as stated above. When oriented, the sample was evaluated with respect to MD direction and TD direction.
- Dimensional change on absorption of water

Evaluated according to JIS A 5905 in terms of expansivity in the direction of thickness.
- Shape retentivity

In the modulus in flexure test described, descent of the indenter was halted when the deflection in bending was 3 mm, and the sample was checked for appearance and evaluated according to the following criteria.

○: The sample remained warped without restoring itself to the flat state thereof before testing.
✕: The sample returned to the flat state before testing, or the structure buckled and yielded due to bending.

Examples 2, 3

Composite laminates were prepared in the same manner as in Example 1 with the exception of altering the expansion ratio, stretch ratio and mode of lamination of Example 1 as listed in Table 1. The results of evaluation of the products obtained are shown in Table 1.

Example 4

i)Preparation of Expanded Sheet of Polyolefin Resin

In step (2) of preparing the expandable resin composition, the following materials were used for the composition.
High-density polyethylene ("JY20," product of Nippon Polychem Co., Ltd., 951 kg/m$^3$ in density, 9.0 g/10 min in MFR), 50 parts by weight
Polypropylene("MH8," product of Nippon Polychem Co., Ltd., 900 kg/m$^3$ in density, 0.3 g/10 min in MFR), 25 parts by weight
Silane-modified polypropylene ("XPM800HM," product of Mitsubishi Chemical Co., Ltd., 912 kg/m$^3$ in density, 11 g/10 min in MFR), 25 parts by weight
Silane crosslinking catalyst (mater batch of dibutyltin dilaurate, "PZ-10S," product of Mitsubishi Chemical Co., Ltd.), 1.5 parts by weight
Thermally decomposable blowing agent (ADCA), 4 parts by weight
The mixture of the five materials given above was kneaded in the same manner as in Example 1, and the kneaded mixture was passed between a roll 13 having cavities and a roll 16 having no cavities using a blowing agent kneading screw extruder 10 as shown in FIG. 6, with the lip opening degree of a die 12 adjusted to 2 mm, whereby an expandable resin composition sheet 21 was obtained which had a large number of projections 22 each in the form of a solid cylinder and formed on one surface of a sheet substrate 23 as seen in FIG. 7.
Before expansion, the expandable resin composition sheet 21 was immersed in hot water at 95° C for 10 hours for crosslinking with water and was thereafter superheated for expansion as in the expansion step (5) of Example 1 to obtain an expanded sheet 26 of honeycomb structure which comprised high-density portions 24 and low-density portions 25 as shown in FIG. 8.
A composite laminate was obtained in the same manner as in Example 1 with the exception of these features. Table 1 shows the result of evaluation of the product obtained.

Example 5

The same procedure as in Example 1 was performed except that the expansion time of Example 1 was altered to 10 minutes.

Comparative Example 1

A composite laminate was obtained in the same manner as in Example 1 with the exception of using an expanded sheet of polypropylene ("Softron SP#1005," product of Sekisui Chemical Co., Ltd., 10 cc/g in expansion ratio, 5 mm in thickness) in place of the expanded sheet of polyolefin resin used in Example 1. Table 1 shows the result of evaluation of the product obtained.

Since the compression test failed to reveal a noticeable elastic region, a slope approximate to zero in the very initial stage was taken as a modulus in compression.

The bending buckling strain is not shown since the sample was soft and difficult to check by bending.

Comparative Examples 2, 3

Composite laminates having properties not included within the scope of the invention were obtained by performing the same procedure as in Example 1 with the exception of alterations listed in Table 1. Table 1 shows the results of evaluation of the products obtained.

Comparative Example 4

A commercial MDF, medium-density wood fiber board MDF ("Highbestwood L," product of Noda Col., Ltd.) was evaluated in the same manner as in Example 1. Table 1 shows the result of evaluation.

Table 1

| | | Unit | | Ex. 1 | Ex. 2 | Ex. 3 | Ex. 4 | Ex. 5 | Comp. Ex. 1 | Comp. Ex. 2 | Comp. Ex. 3 | Comp. Ex. 4 |
|---|---|---|---|---|---|---|---|---|---|---|---|---|
| Expanded sheet | Density | $kg/m^3$ | | 100 | 200 | 100 | 125 | 100 | 100 | 100 | 50 | |
| | Expansion ratio | times | | 10 | 5 | 10 | 8 | 10 | 10 | 10 | 20 | |
| | Aspect ratio | – | | 2.2 | 1.5 | 2.2 | | 1.2 | 1 | 2.2 | 1.5 | |
| | Modulus in compression | MPa | | 20 | 41 | 20 | 10 | 7 | 2 | 20 | 4 | |
| | Bending buckling strain | % | | 6.1 | 4.5 | 6.1 | 8 | 1.8 | - | 6.1 | 2.6 | |
| | Coefficient of linear expansion | $\times 10^{-5}/°C$ | | 9.6 | 9.5 | 9.6 | 9.2 | 9.6 | 10.2 | 9.6 | 9.6 | |
| | Thickness | mm | | 5 | 15 | 5 | 8 | 5 | 5 | 5 | 5 | |
| Stretched sheet | Stretch ratio | times | | 30 | 25 | 30 | 30 | 30 | 30 | 5 | 30 | |
| | Modulus in tension | GPa | | 12 | 15 | 12 | 12 | 12 | 12 | 3 | 12 | |
| | Coefficient of linear expansion | $\times 10^{-5}/°C$ | | −1.5 | −1.8 | −1.5 | −1.5 | −1.5 | −1.5 | 2.3 | −1.5 | |
| | Thickness of single sheet | mm | | 0.2 | 0.2 | 0.2 | 0.2 | 0.2 | 0.2 | 0.2 | 0.2 | |
| | Lamination | | | A[*2] | B[*3] | C[*4] | D[*5] | A[*2] | A[*2] | A[*2] | A[*2] | |
| | Combined thickness | mm | | 0.2 | 2 | 0.8 | 0.4 | 0.2 | 0.2 | 0.2 | 0.2 | |
| Composite laminate | Combined thickness | mm | | 5.4 | 19 | 6.6 | 8.8 | 5.4 | 5.4 | 5.4 | 5.4 | 6 |
| | Modulus in flexure | GPa | MD | 2.5 | 6.2 | 3 | 1.5 | 1.1 | 0.5 | 0.6 | 0.8 | 3.2 |
| | | | TD | 0.6 | 1.5 | | | 0.3 | 0.1 | 0.2 | 0.2 | |
| | Flexural strength | MPa | MD | 7 | 21 | 12 | 9 | 4 | 1.2 | 1.6 | 2.1 | 15 |
| | | | TD | 3 | 5 | | | 0.8 | 0.25 | 0.5 | 0.6 | |
| | Coefficient of linear expansion | $\times 10^{-5}/°C$ | MD | 0.6 | −0.2 | 0.6 | 0.5 | 0.6 | 1 | 2.8 | 0.6 | 0.2 |
| | | | TD | 6.5 | 5 | | | 6.4 | 7.2 | 9.2 | 6.5 | |
| | Dimensional change[*1] | % | | 0 | 0 | 0 | 0 | 0 | 0 | 0 | 0 | 2.7 |
| | Shape retentivity | | | O | - | − | − | × | × | − | × | × |

```
Translation Notes

*1:  Dimensional change on absorption of water.

*2:  Single monoaxial sheet.

*3:  Ten component sheets as arranged monoaxially.

*4:  Four component sheets in orthogonal arrangement.

*5:  Two component sheets in orthogonal arrangement.
```

INDUSTRIAL APPLICABILITY

The invention relates to polyolefin resin composite laminates prepared entirely from polyolefin resins and having high rigidity for use as civil engineering or construction materials, building materials, vehicle members, etc. Made available by the invention are polyolefin resin composite laminates prepared only from polyolefin resin materials which are environmentally friendly and flexible. The laminates are lightweight, have high rigidity, remain free of decay, show no dimensional variations if subjected to temperature or humidity variations and are amenable to recycling.

**Claims**

1.  A polyolefin resin composite laminate comprising a polyolefin resin structural sheet having a density of 40 to 300 kg/m$^3$ and a modulus in compression of at least 5 MPa, and a polyolefin resin sheet laminated to at least one surface of the structural sheet and having a modulus in tension of at least 5 GPa in one direction.

2.  A polyolefin resin composite laminate comprising an expanded polyolefin resin sheet which is 1.1 to 4.0 in the average of aspect ratios Dz/Dxy of cells incorporated therein, 3 to 20 times in expansion ratio and at least 5 MPa in modulus in compression, and a polyolefin resin sheet laminated to at least one surface of the expanded resin sheet and having a modulus in tension of at least 5 GPa in one direction.

3.  A polyolefin resin composite laminate comprising an expanded polyolefin resin sheet which is 1.1 to 4.0 in the average of aspect ratios Dz/Dxy of cells incorporated therein, 3 to 20 times in expansion ratio and at least 5 MPa in modulus in compression, and a stretched polyolefin resin sheet laminated to at least one surface of the expanded resin sheet, stretched at least 10 times in one direction and having a modulus in tension of at least 5 GPa.

4.  A polyolefin resin composite laminate which comprises an expanded polyolefin resin sheet having an expansion ratio of 3 to 20 times and a modulus in compression of at least 5 MPa, and a stretched polyolefin resin sheet laminated to at least one surface of the expanded resin sheet, stretched at least 10 times in one direction and having a modulus in tension of at least 5 GPa, and which is obtained by reacting a polyolefin resin with a modifying monomer to modify the resin, kneading the modified resin obtained and a thermally decomposable chemical blowing agent added thereto, shaping the resulting expandable resin composition into a sheet, laminating a facing material to at least one surface of the expandable sheet obtained, the facing material having a strength capable of inhibiting the sheet from expanding in in-plane directions when the sheet is heated for expansion, and thereafter heating the expandable sheet for expansion.

5.  A polyolefin resin composite laminate comprising a polyolefin resin structural sheet having a density of 40 to 300 kg/m$^3$, a bending buckling strain of at least 2%, and a modulus in compression of at least 5 MPa, and a stretched polyolefin resin sheet laminated to at least one surface of the structural sheet, stretched at least 10 times in one direction and having a modulus in tension of at least 5 GPa.

6.  A polyolefin resin composite laminate comprising an expanded polyolefin resin sheet which is 1.1 to 4.0 in the average of aspect ratios Dz/Dxy of cells incorporated therein, 3 to 20 times in expansion ratio, at least 2% in bending buckling strain, and at least 5 MPa in modulus in compression, and a stretched polyolefin resin sheet laminated to at least one surface of the expanded resin sheet, stretched at least 10 times in one direction and having a modulus in tension of at least 5 GPa.

**Patentansprüche**

1. Ein Polyolefinharzcompositelaminat mit einem Polyolefinharzkonstruktionsblech, das eine Dichte von 40 bis 300 kg/m$^3$ und ein Elastizitätsmodul bei Druck von mindestens 5 MPa hat und einem Polyolefinharzblech, welches auf zumindest eine Fläche des Konstruktionsblechs auflaminiert ist und in eine Richtung ein Elastizitätsmodul bei Zug von mindestens 5 Gpa aufweist.

2. Ein Polyolefinharzcompositelaminat mit einem gedehnten Polyolefinharzblech, das bezüglich der darin enthaltenen Zellen ein mittleres Längenverhältnis Dz/Dxy von 1,1 bis 4,0 hat, ein Expansionsverhältnis von 3 bis 20 und ein Elastizitätsmodul bei Druck von mindestens 5 MPa aufweist und einem Polyolefinharzblech, welches auf mindestens eine Oberfläche des gedehnten Harzbleches auflaminiert ist und welches in eine Richtung ein Elastizitätsmodul bei Zug von mindestens 5 GPa hat.

3. Ein Polyolefinharzcompositelaminat mit einem gedehnten Polyolefinharzblech, welches bezogen auf die darin enthaltenen Zellen ein mittleres Längenverhältnis Dz/Dxy von 1,1 bis 4,0 hat, ein Expansionsverhältnis von 3 bis 20 und ein Elastizitätsmodul bei Druck von mindestens 5 MPa aufweist und einem gestreckten Polyolefinharzblech, welches an mindestens einer Oberfläche des gedehnten Harzbleches auflaminiert ist, das zumindest zehnmal in eine Richtung gestreckt wurde und ein Elastizitätsmodul bei Zug von mindestens 5 GPa hat.

4. Ein Polyolefinharzcompositelaminat mit einem gedehnten Polyolefinharzblech, das ein Expansionsverhältnis von 3 bis 20 und ein Elastizitätsmodul bei Druck von mindestens 5 MPa hat und einem gestreckten Polyolefinharzblech, das auf mindestens eine Oberfläche des gedehnten Harzbleches auflaminiert ist, welches mindestens zehnmal in eine Richtung gestreckt wurde und ein Elastizitätsmodul bei Zug von mindestens 5 GPa aufweist und welches dadurch erhalten wird, daß zur Modifizierung des Harzes ein Polyolefinharz mit einem modifizierenden Monomer zur Reaktion gebracht, das erhaltene modifizierte Harz geknetet und ein thermisch zersetzbares chemisches Treibmittel hinzugegeben wird, die erhältliche expandierbare Harzmischung zu einem Blech geformt, sowie ein Deckschichtwerkstoff auf mindestens eine Oberfläche des erhaltenen dehnbaren Blechs auflaminiert wird, wobei der Deckschichtwerkstoff eine Stärke hat, die gewährleistet, daß bei der Erwärmung des Blechs zwecks Dehnung das Blech nicht in Richtungen der gleichen Ebene expandiert und danach das dehnbare Blech für die Dehnung erwärmt wird.

5. Ein Polyolefinharzcompositelaminat mit einem Polyolefinharzkonstruktionsblech, das eine Dichte von 40 bis 300 kg/m$^3$, eine Biege-Knickverformung von mindestens 2 % und ein Elastizitätsmodul bei Druck von mindestens 5 MPa aufweist und einem gestreckten Polyolefinharzblech, welches auf mindestens eine Oberfläche des Konstruktionsblechs auflaminiert ist, welches zumindestens zehnmal in eine Richtung gestreckt wurde und ein Elastizitätsmodul bei Zug von mindestens 5 GPa hat.

6. Ein Polyolefinharzcompositelaminat mit einem gedehnten Polyolefinharzblech, welches bezogen auf die darin enthaltenen Zellen ein mittleres Längenverhältnis Dz/Dxy von 1,1 bis 4,0 hat, ein Expansionsverhältnis von 3 bis 20, eine Biege-Knickverformung von mindestens 2 % und ein Elastizitätsmodul bei Druck von mindestens 5 MPa aufweist und einem gestreckten Polyolefinharzblech, welches auf mindestens eine Oberfläche des gedehnten Harzbleches auflaminiert ist, welches zumindestens zehnmal in eine Richtung gedehnt wurde und ein Elastizitätsmodul bei Zug von mindestens 5 GPa hat.

**Revendications**

1. Un laminé composite de résine de polyoléfine comprenant une feuille de résine de polyoléfine structurée ayant une densité entre 40 et 300 kg/m3 et un module de compression d'au moins 5MPa et une feuille de résine de polyoléfine laminé sur au moins une surface de la feuille structurée et ayant un module de tension d'au moins 5GPa dans une direction.

2. Un laminé composite de résine de polyoléfine comprenant une feuille de résine de polyoléfine expansée qui présente en moyenne des rapports Dz / Dxy pour les cellules incorporées dans ladite feuille, un coefficient d'expansion entre 3 et 20 et un module de compression d'au moins 5GPa et une feuille de résine de polyoléfine laminée sur au moins une surface de la feuille de résine expansée et ayant un module de tension d'au moins 5GPa dans une direction.

3. Un laminé composite de résine de polyoléfine comprenant une feuille de résine de polyoléfine expansée qui présente en moyenne des rapports Dz / Dxy pour les cellules incorporées dans ladite feuille, un coefficient d'expansion entre 3 et 20 et un module de compression d'au moins 5GPa et une feuille de résine de polyoléfine étirée sur au moins une surface de la feuille de résine expansée , étirée au moins 10 fois dans une direction et ayant un module de tension d'au moins 5GPa dans une direction.

4. Un laminé composite de résine de polyoléfine comprenant une feuille de résine de polyoléfine expansée ayant un coefficient d'expansion entre 3 et 20 et un module de compression d'au moins 5MPa ainsi qu'une feuille étirée de résine de polyoléfine laminée sur au moins une surface de la feuille de résine expansée, étirée au moins 10 fois dans une direction et ayant un module de tension d'au moins 5GPa ; et laquelle feuille est obtenue en créant une réaction entre la résine de polyoléfine et un monomère modifié destiné à modifier la résine en malaxant la résine modifiée obtenue et un agent gonflant chimique se décomposant thermiquement ajouté , en modelant la composition de résine expansible en une feuille, en laminant un matériau de surface sur au moins une surface de la feuille expansible obtenue ; le matériau de surface ayant une force capable d'empêcher la feuille de s'expanser dans des directions se trouvant dans un plan lorsque la feuille est chauffée pour être expansée , puis en chauffant la feuille à expanser .

5. Un laminé composite de résine de polyoléfine comprenant une feuille structurée en résine de polyoléfine ayant une densité de 40 à 300 kg/m3, une déformation de pliage - courbure d'au moins 2% et un module de compression d'au moins 5MPa ainsi qu'une feuille de résine de polyoléfine étirée , laminée sur au moins une surface de la feuille structurée, étirée au moins 10 fois dans une direction et ayant un module de tension d'au moins 5Gpa.

6. Un laminé composite de résine de polyoléfine étirée comprenant une feuille de résine de polyoléfine expansée qui présente en moyenne des rapports Dz / Dxy pour les cellules incorporées dans ladite feuille, un coefficient d'expansion entre 3 et 20, d'au moins 2% de déformation de pliage - courbure et un module de compression d'au moins 5 MPa ainsi qu'une feuille de résine de polyoléfine étirée, laminée sur au moins une surface d'une feuille de résine expansée, étirée au moins 10 fois dans une direction et ayant un module de tension d'au moins 5 GPa.

EP 1 174 263 B1

# Fig.1A

z direction

x-y direction

1

2

A

# Fig.1B

3

Dz

Dxy

# Fig.2

tensile yield point

tensile proportional limit

tensile stress

region of plastic deformation

tensile strain

tensile proportional limit strain

tensile yield strain

20

## Fig.3

bending buckling
point

bending stress

bending buckling strain

## Fig.4

bending stress

region of shape retentivity

flexural proportional limit strain

flexural yield strain

## Fig.5

MD direction

TD direction

15
14
11
14
15

## Fig.6

## Fig.7

### (a)

### (b)

Fig. 8